Europäisches Patentamt

European Patent Office

Office européen des brevets

(19)

(11) Veröffentlichungsnummer: **0 289 766**

**A2**

# (12) EUROPÄISCHE PATENTANMELDUNG

(21) Anmeldenummer: **88104625.4**

(22) Anmeldetag: **23.03.88**

(51) Int. Cl.4: **F02D 11/10**

(30) Priorität: **02.05.87 DE 3714697**

(43) Veröffentlichungstag der Anmeldung:
**09.11.88 Patentblatt 88/45**

(84) Benannte Vertragsstaaten:
**DE FR GB SE**

(71) Anmelder: **VDO Adolf Schindling AG**
**Gräfstrasse 103**
**D-6000 Frankfurt/Main(DE)**

(72) Erfinder: **Mausner, Eberhard**
**Rotherweingartenweg 42 a**
**D-6232 Bad Soden(DE)**

(74) Vertreter: **Klein, Thomas, Dipl.-Ing. (FH)**
**Sodener Strasse 9 Postfach 6140**
**D-6231 Schwalbach a. Ts.(DE)**

(54) **Einrichtung zur Ermittlung und/oder Beeinflussung von Betriebsdaten von Kraftfahrzeugen mit Verbrennungsmotor.**

(57) Es wird eine Einrichtung zur Ermittlung und/oder Beeinflussung von Betriebsdaten von Kraftfahrzeugen, insbesondere zur Geschwindigkeitsbeeinflussung von Fahrzeugen mit Brennkraftmaschinen und elektrischer Übertragung der Gaspedalstellung auf ein mit der Drosselklappe oder der Verstelleinrichtung der Einspritzpumpe verbundenes elektrisches Stellelement angegeben, die eine Meßeinrichtung zur Bestimmung von Nebenschlußwiderständen zu dem mit dem Gaspedal und der Drosselklappe verbundenen elektrischen Stellungsgeber aufweist. Solche Nebenschlußwiderstände (Ableitwiderstände) beeinflussen nachteilig die angestrebte genaue Zuordnung von Gaspedalstellung zu Drosselklappenstellung.

EP 0 289 766 A2

Fig. 1

## Einrichtung zur Ermittlung und/oder Beeinflussung von Betriebsdaten von Kraftfahrzeugen mit Verbrennungsmotor

Die Erfindung betrifft eine Einrichtung zur Ermittlung und/oder Beeinflussung von Betriebsdaten von Kraftfahrzeugen mit verbrennungsmotor nach der Gattung des Hauptanspruchs.

Der Vortrieb von Kraftfahrzeugen mit verbrennungsmotor wird im allgemeinen entsprechend dem Willen des Fahrers durch eine Stelleinrichtung, insbesondere ein Fahrpedal, beeinflußt, dessen Augenblicksstellung auf ein die Kraftstoffmenge, mittelbar oder unmittelbar zumessendes Element übertragen wird. Dieses die Kraftstoffmenge zumessende Element kann entweder die Drosselklappe oder der Verstellhebel einer Kraftstoff-Einspritzpumpe sein.

Es kann aus verschiedenen Gründen erwünscht sein, anstelle einer mechanischen Verbindung zwischen der Stelleinrichtung und der Kraftstoffzumeßeinrichtung eine elektrische Verbindung vorzusehen. Insbesondere bei Nutzfahrzeugen mit Unterflur-oder Heckmotoren und bei Gelenkbussen mit Heckmotor können die notwendigen Pedalkräfte bei mechanischer Übertragung durch Gestänge oder Bowdenzug nur durch sorgfältige Verlegung niedrig und unabhängig von Fahrzeugbewegungen gehalten werden.

Darüber hinaus weisen derartige Einrichtungen einen montage-und wartungsungünstigen Aufbau auf.

Es sind ferner Einrichtungen zur Konstanthaltung der Geschwindigkeit von Kraftfahrzeugen bekannt, bei denen keine feste Zuordnung zwischen der Augenblickstellung der Stelleinrichtung und der Drosselklappe oder dem Verstellhebel der Kraftstoffeinspritzpumpe besteht.

Es ist bereits bekannt, in einer Einrichtung zum Regeln der Fahrgeschwindigkeit eines Kraftfahrzeugs mit einem vom Fahrzeugführer betätigbaren Stellglied, insbesondere einem Gaspedal, die Übertragung auf ein die Kraftstoff-Luft-Gemischbildung beeinflussendes Element derart auszubilden, daß eine Nachlaufregelung mit einem ersten Stellungsgeber am Sollwerteingang und einem zweiten Stellungsgeber am Istwerteingang eines Reglers entsteht. Dabei ist der erste Stellungsgeber mit dem Gaspedal und der zweite Stellungsgeber mit der Drosselklappe zur Rückmeldung verbunden, wobei die Drosselklappe durch einen Servomotor im Sinne einer Angleichung des Istwertes an den Sollwert verstellt wird.

Da mit dem Gaspedal nur der Stellungsgeber gekuppelt ist, bleiben die Pedalkräfte gering und werden auch nicht durch Verwindungen und Bewegungen des Fahrzeugaufbaus beeinflußt. Die Gaspedal und Drosselklappe bzw. Einspritzpumpe verbindende elektrische Leitung kann ohne Schwierigkeiten und einschränkende Bedingungen verlegt werden.

Zur Bildung des den Sollwert darstellenden elektrischen Signals und der Erzeugung des Rückmeldesignals werden im allgemeinen mechanisch veränderliche Widerstände (Potentiometer) als Spannungsteiler geschaltet. Wegen der geforderten genauen Zuordnung von Spannungswert und Potentiometerstellung sind für die elektrischen Werte nur verhältnismäßig enge Toleranzen zugelassen. Diese sollen auch nach längerer Betriebsdauer eingehalten werden. Infolge von Alterung, Einwirkung von Kraftstoff, Öl, Kondenswasser und Staub können sich jedoch Nebenwege zu den Widerstandsbahnen, sogenannte Ableitwiderstände, ausbilden, welche die ursprünglichen Werte und damit die Zuordnung von Signalspannung und Schleiferstellung verfälschen. Dies kann zu unerwünschten oder auch gefährlichen Fahrzuständen führen.

Es ist daher bekannt, Referenzschalter vorzusehen, die bei vorgegebenen Schleiferstellungen der Potentiometer schalten. Die in diesem Augenblick abgegriffene Signalspannung muß innerhalb einer engen Toleranz liegen. Montage und Justage der Referenzschalter ist zeit-und kostenaufwendig.

Es ist daher Aufgabe der Erfindung, eine Einrichtung zur Ermittlung und/oder Beeinflussung von Betriebsdaten von Kraftfahrzeugen mit Verbrennungsmotor nach der Gattung des Hauptanspruchs anzugeben, die die Kennlinie des im Sollwertgeber verwendeten veränderlichen Widerstandes selbsttätig überwacht und korrigiert.

Die Lösung dieser Aufgabe erfolgt mit den im kennzeichnenden Teil des Hauptanspruchs angegebenen Maßnahmen.

Die erfindungsgemäße Einrichtung mit den Merkmalen des Hauptanspruchs hat den Vorteil, daß die erwünschte strenge Zuordnung von der Schleiferstellung des veränderlichen Widerstandes im Sollwertgeber zu der hieraus abgeleiteten Signalspannung unabhängig von äußeren Einflüssen auch über lange Zeiträume erhalten bleibt. Weiter ist vorteilhaft, daß für die Überwachung und Korrektur keine zusätzlichen elektrischen Verbindungen erforderlich sind.

Weitere vorteilhafte Ausgestaltungen der erfindungsgemäßen Einrichtung ergeben sich aus den Unteransprüchen.

Besonders vorteilhaft ist, daß der Gesamtwiderstand des veränderlichen Widerstandes im Neuzustand eingespeichert werden kann. Jede Veränderung ist dann durch die erfindungsgemäße Einrichtung feststellbar.

Ausführungsbeispiele der Erfindung sind in der Zeichnung dargestellt und in der nachfolgenden Beschreibung näher erläutert. Es zeigen Figur 1 - schematisch als Blockschaltbild ein erstes Ausführungsbeispiel der Erfindung, Figur 2 ein zweites Ausführungsbeispiel in gleicher Darstellungsweise, Figur 3 ein drittes Ausführungsbeispiel, ebenfalls - schematisch dargestellt.

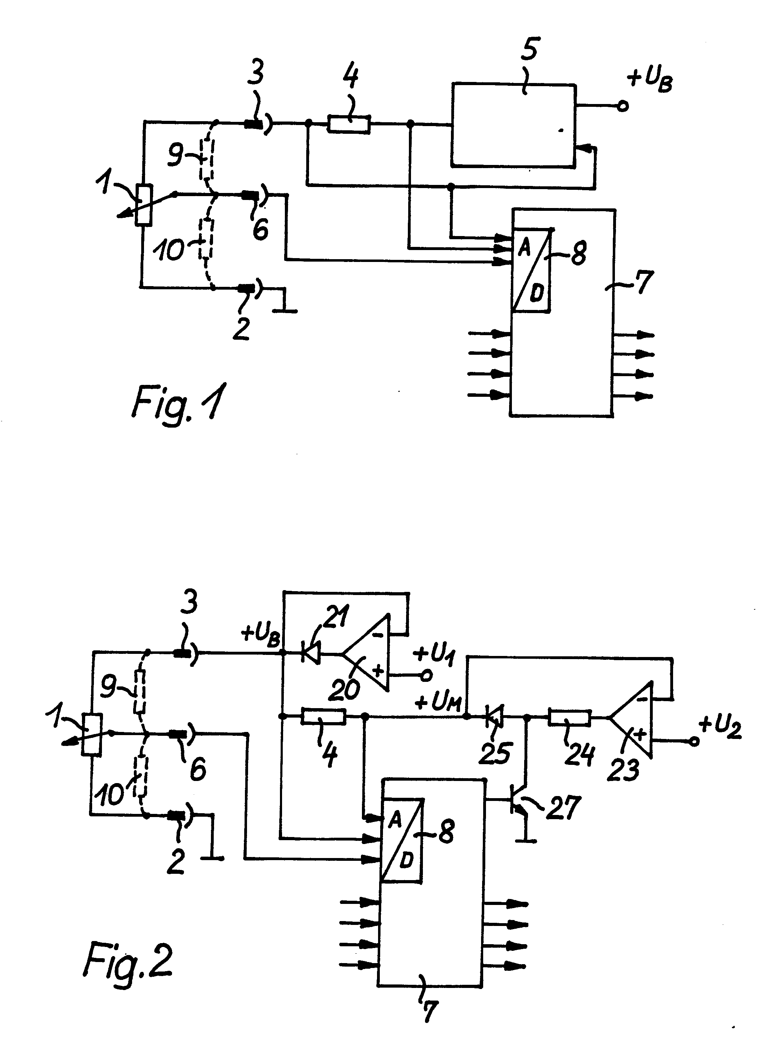

In Figur 1 ist mit 1 der veränderlichen Widerstand bezeichnet, dessen Schleiferstellung in einer vorgegebenen Beziehung zur Stellung des Fahrpedals steht und der somit als Sollwertgeber verwendet wird. Ein Außenanschluß des veränderlichen Widerstandes ist über die Steckverbindung 2 mit einem von der Betriebsspannung verschiedenen Potential, hier der Fahrzeugmasse, verbunden. Der zweite Anschluß ist über eine weitere Steckverbindung 3 und einen Meßwiderstand 4 mit dem Ausgang eines Spannungsreglers 5 verbunden. Dessen einem Eingang wird die Betriebsspannung $+U_B$ zugeführt. Der Mittelabgriff des veränderlichen Widerstandes ist über eine dritte Steckverbindung 6 mit einem Eingang eines einem Rechner 7 vorgeschalteten Analog/Digital-Wandlers 8 verbunden. Beide Enden des Meßwiderstandes 4 sind an weitere Eingänge des Analog/Digital-Wandlers 8 angeschlossen. Das dem Reglerausgang entfernt liegende Ende des Meßwiderstandes 4 ist auf den Regeleingang des Spannungsreglers 5 rückgeführt. Der Rechner steuert entsprechend dem durch die Fahrpedalstellung und damit durch die Schleiferstellung erkennbaren Willen des Fahrzeugführers und gegebenenfalls abhängig von weiteren Parametern, wie Fahrzeuglängs-und -querbeschleunigung oder Radschlupf, die Drosselklappenstellung in der Weise, daß sie mit der Fahrpedalstellung im stationären Zustand in einer vorgegebenen Beziehung steht. Durch Nebenwiderstände, die unerwünscht infolge verschiedener Ursachen parallel zur Widerstandsbahn des Potentiometers 1 entstehen können und die bei 9 und 10 angedeutet sind, können den Sollwert des Widerstandes des Potentiometers nachteilig so verändern, daß sich die Fahrzeuggeschwindigkeit nicht mehr innerhalb der vorgegebenen Grenzen steuern läßt.

Durch die parallel zum veränderlichen Widerstand 1 liegenden Ableitwiderstände 9, 10 ist der Gesamtwiderstand gegenüber dem Sollwert herabgesetzt. Infolgedessen fließt, bei gleichbleibender, geregelter Spannung am Ausgang des Spannungsreglers 5, ein erhöhter Strom durch den Meßwiderstand 4 und die an diesem abfallende Spannung ist größer als der vorgegebene Wert. Diese Spannung wird durch jeweils eine Leitung vom Eingang und vom Ausgang des Meßwiderstandes 4 zum A/D-Wandler 8 und zum Rechner 7 durchgegeben. Dieser erkennt die Abweichung vom Normwert. Nach einer Ausgestaltung der Ausführungsform nach Figur 1 ist der Rechner bei Trennung der Steckverbindungen 2, 3 und 6 lernbereit. Beim Wiederverbinden der Steckverbindungen 2, 3 und 6 werden die Abweichungen aufgrund der Ableitwiderstände erkannt.

Im Ausführungsbeispiel nach Figur 2 liegt im Betriebsfall am veränderlichen Widerstand 1 die geregelte Betriebsspannung $+U_B$. Dazu ist einem ersten Differenzverstärker 20 über den nichtinvertierenden Eingang eine erste Spannung $+U_1$ zugeführt, während der Ausgang des Differenzverstärkers 20 mit der Anode einer ersten Entkopplungsdiode 21 verbunden ist. Die Kathode der Entkopplungsdiode ist mit dem invertierenden Eingang des Differenzverstärkers 20 verbunden, ferner mit dem kalten Ende des Meßwiderstandes 4, einem Eingang des dem Rechner 7 vorgeschalteten A/D-Wandlers 8 und über die Steckverbindung 3 mit einem Außenanschluß des veränderlichen Widerstandes 1. Der zweite Außenanschluß des veränderlichen Widerstandes 1 liegt über eine zweite Steckverbindung 2 an festem Potential, der Mittelanschluß über eine dritte Steckverbindung 6 an einem weiteren Eingang des A/D-Wandlers 8.

Dem nichtinvertierendem Eingang eines zweiten Differenzverstärkers 23 ist eine zweite Spannung $+U_2$ zugeführt, welche zu dem festen Potential - im allgemeinen Masse - ein größeres Spannungsgefälle aufweist als die erste Spannung $U_1$. Der Ausgang des Differenzverstärkers 23 ist über den Widerstand 24 und die Entkopplungsdiode 25 auf den invertierenden Eingang rückgekoppelt. Er ist damit auf die Meßspannung $+U_M$ geregelt. Die Verbindung zwischen dem Widerstand 24 und der Anode der Entkopplungsdiode 25 liegt am Kollektoranschluß eines NPN-Transistors 27. Dessen Emitter liegt an festem Potential, dessen Basisanschluß ist mit einem Steuerausgang des Rechners 7 verbunden.

Im Betrieb der Gesamtvorrichtung zur Geschwindigkeitsbeeinflussung führt der mit dem Basisanschluß des Transistors 27 verbundene Steueranschluß des Rechners 7 eine positive Spannungs die die Kollektor-Emitter-Strecke des Transistors 27 niederohmig macht und den Anodenanschluß der Entkopplungsdiode auf festes Potential zieht. Die Diodenstrecke der Entkopplungsdiode 25 ist damit gesperrt und die Spannungsversorgung erfolgt durch den Spannungsregler 20.

In zyklischen Abständen wird durch Rechner 7 der Basisanschluß des Transistors 27 auf niedriges Potential gesetzt und damit die Kollektor-Emitter-Strecke gesperrt. Über die Entkopplungsdiode wird die nun anstehende Meßspannung $+U_M$ an den Meßwiderstand 4 gelegt. In analoger Weise wie in Figur 1 wird der Spannungsabfall über den Meßwiderstand 4 gemessen und über den A/D-Wandler dem Rechner zugeleitet. Ableitwiderstände 9, 10 .

führen zu einem stärkeren Spannungsabfall, der damit ein Maß für die Größe der Ableitwiderstände darstellt.

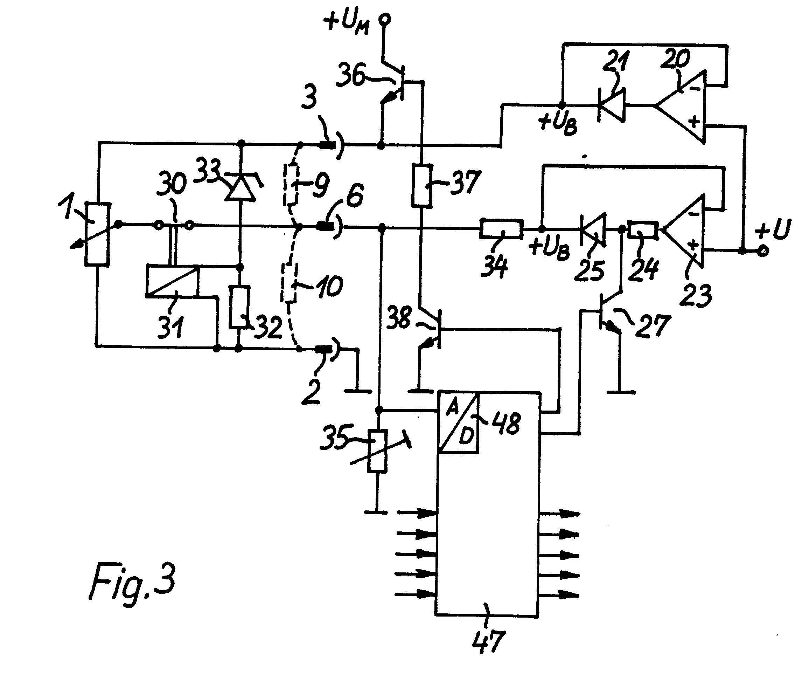

Mit der Ausführungsform der Erfindung nach Figur 3 läßt sich die Größe der Ableitwiderstände nicht nur in der Summe, sondern auch im einzelnen bestimmen. Teile in Figur 3 mit gleicher Darstellung und gleicher Funktion wie in den Figuren 1 und 2 sind mit gleichen Bezugszeichen versehen. In der Rückmeldeleitung ist zwischen Mittelabgriff des veränderlichen Widerstandes 1 und der Steckverbindung 6 der Öffnungskontakt 30 eines Relais 31 angeordnet. Die Relaisspule liegt parallel zu einem Widerstand 32 zwischen festem Potential und über den Anodenanschluß einer Z-Diode 33 an dem festen Potential entgegengesetzten Außenanschluß des veränderlichen Widerstandes 1 und damit an der Betriebsspannung $+U_B$. Die Betriebsspannung $+U_B$ wird von einem als Spannungsregler arbeitenden Differenzverstärker 20 über die Entkopplungsdiode 21 bereitgestellt. Der nichtinvertierende Eingang des Spannungsreglers 20 liegt an der Versorgungsspannung $+U$, der Ausgang ist von der Kathode der Entkopplungsdiode aus auf den invertierenden Eingang zur Gegenkopplung rückgeführt.

Ein zweiter Spannungsregler 23, dessen nichtinvertierender Eingang ebenfalls an die Versorgungsspannung $+U$ angeschlossen und dessen Ausgang vom Kathodenanschluß der Entkopplungsdiode 25 auf den invertierenden Eingang rückgeführt ist, liefert die Betriebsspannung $+U_B$ über einen ersten Widerstand 24, die Entkopplungsdiode 25 und einen weiteren Widerstand 34, der Teil einer Meßwiderstandsanordnung ist, an die Steckverbindung 6 und damit über den geschlossenen Relaiskontakt an den Mittelabgriff des veränderlichen Widerstandes 1. Der zweite Widerstand der Meßwiderstandsanordnung ist durch den Trimmwiderstand 35 gebildet, der zwischen der Steckverbindung 6 und festem Potential liegt. Die Steckverbindung 6 ist ferner mit dem Eingang des A/D-Wandlers 48 im Rechner 47 verbunden.

Der Kollektor eines ersten NPN-Transistors 27 ist mit der Anode der Entkopplungsdiode 25, der Emitter mit festem Potential verbunden. Der Basisanschluß des Transistors 27 wird neu einem ersten Steuerausgang des Rechners mit unterschiedlichen Potentialen versorgt und damit die Kollektor-Emitter-Strecke des Transistors 27 entweder gesperrt oder durchgeschaltet.

Der Kollektor eines zweiten Transistors vom NPN-Typ liegt an einer Meßspannung $+U_M$, deren Spannungsabstand zum festen Potential größer ist als der der Betriebsspannung $+U_B$. Der Emitter des Transistors 36 liegt an der Steckverbindung 3, der Basisanschluß über einen Widerstand 37 am Kollektor eines dritten Transistors 38 vom NPN-Typ. Dessen Emitteranschluß liegt an festem Potential, dessen Basisanschluß liegt an einem zweiten Steuerausgang des Rechners 47, durch den der Transistor 38 und damit auch der Transistor 36 entweder gesperrt oder durchgeschaltet wird.

Während des Normalbetriebs sind die Transistoren 36 und 38 gesperrt. Der veränderliche Widerstand 1 liegt über seine Außenanschlüsse an den Steckverbindungen 2, 3 und die sich am Mittelabgriff einstellende Spannung wird über den geschlossenen Relaiskontakt 30 und die Steckverbindung 6 auf den Eingang des A/D-Wandlers 8 im Rechner 7 gegeben. Die Versorgung der Vorrichtung mit Betriebsspannung $+U_B$ erfolgt durch den Spannungsregler 20. Der Transistor 27 ist dabei durch Ansteuerung des Basisanschlusses mit höherem Potential durchgeschaltet und zieht den Ausgang des Spannungsreglers 23 über den Widerstand 24 auf festes Potential.

Für den Meßvorgang werden die Transistoren 38, 36 durch Anlegen des Basisanschlusses des Transistors 38 an höheres Potential über den zweiten Steuerausgang des Rechners 47 durchgeschaltet. Die höhere Meßspannung $+U_M$ schaltet die Z-Diode 33 durch, die Relaisspule 31 erhält Spannung und der Kontakt 30 öffnet sich. Jetzt stellt ein zwischen den Steckverbindungen 3 und 6 vorhandener unerwünschter Nebenschluß die einzige galvanische Verbindung zwischen der von der Meßspannung durchflossenen Kollektor-Emitter-Strecke des Transistors 36 und dem Eingang des A/D-Wandlers 48 dar, so daß seine Größe bestimmt werden kann. Als Nebenbedingung muß die Größe des Trimmwiderstandes 35 bekannt sein.

Die anschließende Bestimmung der Größe des Ableitwiderstandes 10 erfolgt in der Weise, daß der erste Steuerausgang des Rechners 47 auf niedriges Potential gesetzt und dadurch der Transistor 27 gesperrt wird. Der Spannungsregler 23 versorgt über den Widerstand 24 und die Entkopplungsdiode 25 die Reihenwiderstandsanordnung aus dem Widerstand 34 und den beiden parallel geschalteten Widerständen 35 und 10 , so daß die Größe des Widerstandes 10 bestimmt werden kann.

Im praktischen Betrieb werden die Meßzyklen in periodischen Abständen in das Betriebsprogramm eingeschoben.

Die Erfindung ist unabhängig von dem beschriebenen Ausführungsbeispiel auf alle veränderlichen Widerstände anwendbar, die, als Spannungsteiler geschaltet, als Stellungsgeber in Kraftfahrzeugen wirken.

## Ansprüche

1. Einrichtung zur Ermittlung und/oder Beeinflussung von Betriebsdaten von Kraftfahrzeugen mit wenigstens einem Widerstands-Spannungsteiler mit veränderlichem Teilungsverhältnis als Stellungsgeber, gekennzeichnet durch wenigstens eine Meßeinrichtung (4, 34, 35) zur betriebsmäßigen Überprüfung des Widerstandswertes des wenigstens einen Widerstands-Spannungsteilers.

2. Einrichtung nach Anspruch 1 mit elektrischer Übertragung der Stellung des Fahrpedals auf ein den Kraftstoff oder die Ansaugluft zumessendes Element im Sinne einer Nachlaufregelung, wobei mit dem Fahrpedal ein erster Widerstands-Spannungsteiler mit veränderlichem Teilungsverhältnis als Sollwertgeber und mit dem den Kraftstoff oder die Ansaugluft zumessendes Element ein zweiter Widerstands-Spannungsteiler als Istwertgeber mechanisch gekuppelt ist, dadurch gekennzeichnet, daß jedem Stellungsgeber eine Meßeinrichtung zur betriebsmäßigen Überprüfung des Widerstandswertes zugeordnet ist.

3. Einrichtung nach Anspruch 1 oder 2, dadurch gekennzeichnet, daß in der Zuleitung eines Außenanschlusses des Stellungsgebers (1) ein Meßwiderstand (4) angeordnet ist.

4. Einrichtung nach Anspruch 3, dadurch gekennzeichnet, daß der eingangsseitige und der ausgangsseitige Anschluß des Meßwiderstandes (4) mit einer Meßeinrichtung (7, 8) zur Bestimmung der Spannungsdifferenz verbunden sind.

5. Einrichtung nach einem der vorhergehenden Ansprüche, dadurch gekennzeichnet, daß der eingangsseitige Anschluß des Meßwiderstandes (4) mit der Betriebsspannungsquelle ($+U_B$) verbunden ist.

6. Einrichtung nach einem der Ansprüche 1 bis 4, dadurch gekennzeichnet, daß der eingangsseitige Anschluß des Meßwiderstandes (4) mit einer Meßspannungsquelle ($+U_M$) verbunden ist.

7. Einrichtung nach Anspruch 6, dadurch gekennzeichnet, daß am Ausgang der Betriebsspannungsquelle ($+U_B$) und der Meßspannungsquelle ($+U_M$) jeweils Entkopplungsdioden (21, 25) zur Trennung vorgesehen sind.

8. Einrichtung nach Anspruch 7, dadurch gekennzeichnet, daß die Meßspannungsquelle ($+U_M$) eine größere Spannungsdifferenz zu einem festen Potential aufweist als die Betriebsspannungsquelle ($+U_B$) und daß die Meßspannungsquelle ($+U_M$) während des Normalbetriebs der Vorrichtung unwirksam geschaltet ist.

9. Einrichtung nach Anspruch 1 oder 2, gekennzeichnet durch eine Meßeinrichtung (47, 48) zur Strommessung.

10. Einrichtung nach Anspruch 9, dadurch gekennzeichnet, daß der Strommeßeinrichtung eine aus zwei Widerständen (34, 35) bestehende Reihenschaltung vorgeschaltet ist, die an eine zweite Betriebsspannungsquelle (23, 24, 25) angeschlossen ist und deren Verbindungspunkt über eine lösbare elektrische Verbindung (30) mit dem Mittelabgriff des Stellungsgebers (1) und mit der Meßeinrichtung (47, 48) verbunden ist, daß das dem Verbindungspunkt abgewandte Ende des Widerstandes (35) an festem Potential liegt und daß eine Meßspannungsquelle ($+U_M$) vorgesehen ist, deren Ausgang an einem Außenanschluß des Stellungsgebers (1) angeschlossen ist.

11. Vorrichtung nach Anspruch 10, dadurch gekennzeichnet, daß die Meßspannungsquelle ($+U_M$) während des Normalbetriebs der Vorrichtung unwirksam geschaltet ist.

12. Einrichtung nach Anspruch 10, dadurch gekennzeichnet, daß die zweite Betriebsspannungsquelle (23, 24, 25) während des Normalbetriebs der Vorrichtung unwirksam geschaltet ist.

13. Einrichtung nach einem der Ansprüche 9 bs 12, dadurch gekennzeichnet, daß die lösbare elektrische Verbindung ein durch ein Relais (31) gesteuerter Öffnungskontakt (30) ist.

14. Einrichtung nach Anspruch 13, dadurch gekennzeichnet, daß die Relaisspule (31) über eine Z-Diode (33) an der Meßspannungsquelle ($+U_M$) liegt und daß die Meßspannungsquelle ein größeres elektrisches Potential zu einem festen Potential hat als die Betriebsspannungsquelle (20, 21).

Fig.1

Fig.2

Fig.3